# EUROPÄISCHE PATENTSCHRIFT

(11) **EP 1 599 546 B1**
(45) Veröffentlichungstag und Bekanntmachung des Hinweises auf die Patenterteilung: **19.10.2011**
(21) Anmeldenummer: 04711606.6
(22) Anmeldetag: 17.02.2004
(51) Int. Cl.: C08L 83/12, B01J 20/26, C02F 1/42

(54) **STOFFGEMISCHE**
MIXTURE
MELANGES DE SUBSTANCES

(30) Priorität: 24.02.2003 DE 10307713; 13.06.2003 DE 10326666
(43) Veröffentlichungstag der Anmeldung: 30.11.2005
(73) Patentinhaber: LANXESS Deutschland GmbH, 51369 Leverkusen (DE)
(72) Erfinder: KLIPPER, Reinhold, 50933 Köln (DE); PODSZUN, Wolfgang, 51061 Köln (DE); TREFFURTH, Hanfried, 06792 Sandersdorf (DE); HERRMANN, Udo, 41541 Dormagen (DE); SOEST, Hans-Karl, 51147 Köln (DE); LITZINGER, Ulrich, 57627 Hachenburg (DE)
(86) Internationale Anmeldenummer: PCT/EP2004/001462
(87) Internationale Veröffentlichungsnummer: WO 2004/074379

(56) Entgegenhaltungen:
- GB-A- 956 276
- US-A- 5 203 991

## Beschreibung

Die vorliegende Erfindung betrifft Stoffgemische auf Basis von Organopolysiloxanpolyethern und mindestens einer weiteren Substanz oder Komponente, bevorzugt einem aus wässriger Suspension erhaltenen Polymer, besonders bevorzugt einem vernetzten, funktionalisierten Polystyrol-Perlpolymerisat sowie die Verwendung solcher Stoffgemische auf Basis von Organopolysiloxanpolyethern mit vernetzten, funktionalisierten Polystyrol-Perlpolymerisaten als freifließende Ionenaustauscher oder freifließende Adsorber, besonders bevorzugt freifließende monodisperse oder heterodisperse Anionenaustauscher oder Kationenaustauscher aber auch freifließende Mischungen von Anionenund Kationenaustauschern.

Stoffgemische aus vernetzten, funktionalisierten Polystyrol-Perlpolymerisaten und Organopolysiloxanpolyethern und deren Verwendungen gehören noch nicht zum Stand der Technik. Allerdings ist die Fliessfähigkeit von beispielsweise Ionenaustauschern eine wichtige Eigenschaft für ihre technische Handhabung bei der Weiterverarbeitung, Abpackung und Anwendung. Besonders wichtig ist diese Fliessfähigkeit, wenn die Ionenaustauscher über Trichter oder andere Abfüll-, systeme mit kleinen Auslauföffnungen in Kartuschen oder Kleinfilter abgefüllt werden sollen. Derartige Kartuschen und Kleinfilter werden z.B. in Haushalten zur Aufbereitung von Trinkwasser oder zur Enthärtung des Leitungswassers eingesetzt, um Verkalkungen zu verhindern und störende Ionen zu entfernen.

Herkömmliche Ionenaustauscher weisen im Allgemeinen nach ihre Herstellung keine ausreichende Fließfähigkeit auf. Insbesondere zeigen monodisperse Ionenaustauscher eine schlechte Fliessfähigkeit, was auf ein starkes Haften der Perlen untereinander wegen der Ausbildung regelmäßiger und dichter Kugelpackungen sowie dem geschlossenen Restwasser zurückgeführt werden kann. Mit monodispers werden in der vorliegenden Erfindung solche Ionenaustauscher bezeichnet, die eine enge oder sehr enge Teilchengrößenverteilung aufweisen.

Die Herstellung heterodisperser vernetzter Perlpolymerisate wird beispielsweise in Ullmann's Encyclopedia of Industrial Chemistry, 5th Ed. Vol. A21, 363-373, VCH Verlagsgesellschaft mbH, Weinheim 1992 beschrieben. Durch Sulfonierung erhält man daraus heterodisperse Kationenaustauscher, wie sie beispielsweise in der DE-A 19 644 227 beschrieben werden. Heterodisperse gelförmige oder makroporöse Anionenaustauscher erhält man daraus beispielsweise entweder nach dem Phthalimidverfahren gemäß US-A 4 952 608 oder nach dem Chloretherverfahren gemäß US-A 4 207 398 oder US-A 5 726 210.

Gemäß DE-A 19 644 227 erhält man heterodisperse Kationenaustauscher beispielsweise indem man in einem Polymerisationsreaktor ein Schutzkolloid auf Cellulosebasis in entsalztem Wasser sowie Dinatriumhydrogenphosphat löst. Die wässrige Lösung wird bei Raumtemperatur gerührt. Anschließend gibt man Monomermischung bestehend aus Styrol, technischem Divinylbenzol, Dibenzoylperoxid (75 %ig) zu, rührt 6 Stunden bei 70°C und weitere 3 Stunden bei 90°C. Das erhaltene Perlpolymerisat wird mit Wasser gewaschen und anschließend im Trockenschrank getrocknet. In einem Reaktionsgefäß, das zur Luftatmosphäre einen offenen Zugang besitzt, werden 78 %ige Schwefelsäure bei Raumtemperatur vorgelegt. Dazu gibt man Perlpolymerisat. Unter Rühren werden 1,2-Dichlorethan dosiert und weitere 3 Stunden bei Raumtemperatur gerührt. Dann wird Schwefelsäure-Monohydrat zudosiert. Es wird auf 120°C erhitzt. Bereits während des Aufheizens destilliert Dichlorethan ab. Es wird weitere 4 Stunden bei 120°C gerührt. Nach 3,5-stündigem Rühren bei 120°C wird zur Entfernung noch vorhandener Dichlorethanreste 30 Minuten lang bei 120°C Luft durch die Suspension geblasen.

Die Suspension wird in eine Säule überführt und mit verschiedenen Schwefelsäuren abnehmender Konzentration und zuletzt mit Wasser von oben beaufschlagt und hydratisiert. Alternativ werden alle Operationen unter Stickstoff durchgeführt. Der Inhalt der DE-A 19 644 227 wird von der vorliegenden Anmeldung mit umfasst.

Heterodisperse gelförmige oder makroporöse Anionenaustauscher werden beispielsweise nach dem Phthalimidverfahren gemäß US-A 4 952 608 erhalten, deren Inhalt von der vorliegenden Anmeldung mit umfasst wird. Hierbei werden beispielsweise zunächst Phthalimid und Formalin in 1,2-Dichlorethan eingetragen und zu N-Methylolphthalimid umgesetzt. Hieraus stellt man Bis-(phthalimidomethyl)-ether her. Zunächst wird Oleum dann ein mit 5 Gew.-% vernetztes Polystyrolperlpolymerisat eingetragen. Die Suspension wird auf 70°C erhitzt und weitere 18 Stunden gerührt. Dichlorethan wird destillativ aus dem System entfernt. Das erhaltene Perlpolymerisat wird in Wasser aufgenommen mit Natronlauge versetzt und bei 180°C 8 Stunden behandelt. Nach dem Abkühlen wird das erhaltene aminomethylierte Perlpolymerisat mit Wasser ausgewaschen.

Heterodisperse gelförmige oder makroporöse Anionenaustauscher werden aber auch beispielsweise nach dem Chloretherverfahren gemäß. US-A 4 207 398 oder US 5 726 210 erhalten indem, man ein haloalkylierendes Agens auf ein aromatisches vernetztes Copolymer einwirken lässt, das nicht umgesetzte Haloalkylierungsreagens vom aromatischen, vernetzten, Haloalkyl-enthaltenden Copolymer entfernt und letzteres dann mit einem Amin in Gegenwart von Wasser und einem wasserlöslichen anorganischen Salz umsetzt. Die Inhalte der US-A 4 207 398 und US 5 726 210 werden von der vorliegenden Anmeldung mit umfasst.

Die Herstellung monodisperser Ionenaustauscher wird beispielsweise in den Patentschriften US-A 4 444 961, EP-A 0 046 535, EP-A 0 098 130, EP-A 0 101 943, EP-A 0 418 603, EP-A 0 448 391, EP-A 0 062 088 und US-A 4 419 245 beschrieben, deren Inhalte in Bezug auf die Herstellung monodisperser Ionenaustauscher von der vorliegenden Anmeldung mit umfasst werden.

Monodisperse Ionenaustauscher werden beispielsweise gemäß EP-A 0 046 535 hergestellt, indem man
- a): aus dem zu polymerisierenden Monomer bzw. Polymerisationsgemisch durch Eindüsen in eine mit dem Monomer bzw. Polymerisationsgemisch im wesentlichen nicht mischbare, kontinuierlich zugeführte Flüssigkeit Tröpfchen einheitlicher Größe erzeugt;
- b): diese Tröpfchen einheitlicher Größe in besagter Flüssigkeit kontinuierlich nach an sich bekannten Verfahren der Mikroverkapselung entweder unmittelbar mit einer unter den anzuwendenden Polymerisationsbedingungen stabilen Hülle oder zunächst mit einer gegenüber Scherkräften stabilen Hülle verkapselt und diese gegenüber Scherkräften stabile Hülle in einem zweiten Teilschritt kontinuierlich oder diskontinuierlich zu einer unter den anzuwendenden Polymerisationsbedingungen stabilen Hülle härtet;
- c): die mit einer unter den anzuwendenden Polymerisationsbedingungen stabilen Hülle ver- kapselten Monomer- bzw. Polymerisationsgemisch-Tröpfchen anschließend polymerisiert, mit der Maßgabe,

- a): dass man das Monomer bzw. das Polymerisationsgemisch im Gleichstrom zur kontinuierlich zugeführte kontinuierlichen Phase in diese eindüst;
- ß): dass man die Erzeugung der Tröpfchen und deren Verkapselung in verschiedenen Bereichen des Reaktionsgefäßes vornimmt;
- γ): dass man die Verfahrensschritte a) und b) in der Weise ausführt, dass auf die Tröpfchen von ihrer Erzeugung bis zu ihrer Verkapselung keine die Integrität der Tröpfchen verändernden Kräfte einwirken.

Monodisperse Ionenaustauscher erhält man aber auch beispielsweise gemäß US-A 4 444 961 durch
- (a): Bildung eines Monomerstrahls, der laminare Strömungseigenschaften, definiert durch eine Reynoldszahl von 120 bis 1.200, aufweist, aus einer Monomerphase durch Strömenlassen der Monomerphase durch eine Öffnung in eine kontinuierliche Phase, welche mit der Monomerphase nicht mischbar ist und welche eine ausreichende Menge eines Suspendier- mittels zur Stabilisierung von Tropfen der Monomerphase enthält;
- (b): Brechen des Monomerstrahls in Tropfen von gleichförmiger Größe durch Schwingungs- anregung des Strahls, definiert durch eine Strouhalzahl von 0,15 bis 1,5;
- (c): nachfolgend Ermöglichen der Monomertropfen, die eine Dichte niedriger als die Dichte des Suspensionsmediums haben, zum Aufsteigen durch das Medium, oder der Monomer- tropfen, die eine Dichte größer als die Dichte des Suspensionsmediums haben, zum Fallen durch das Medium in einen Reaktorbehälter für eine Ansatz-Polymerisation derart, dass im wesentlichen keine Polymerisation von Monomer vor der Überführung der Monomer- tropfen in den Reaktorbehälter erfolgt, und Erzielung einer Änderung der Monomerkon- zentration derart, dass die Konzentration von Monomertropfen in dem Reaktorbehälter größer ist als die Konzentration der Monomertropfen, wie gebildet, und von 0,01 bis 20 Vol.-%, bezogen auf das Gesamtvolumen der kontinuierlichen und monomeren Phasen, zum Zeitpunkt der Bildung beträgt und von 30 bis 60 Vol.-%, bezogen auf das Gesamt- volumen der kontinuierlichen und monomeren Phasen, zum Zeitpunkt der Polymerisation beträgt;
- (d): Polymerisieren der suspendierten Tropfen bis zum Abschluss unter Rühren in dem Ansatz- Reaktorbehälter unter Bedingungen, welche kein signifikantes Koaleszieren oder zusätz- liche Dispersion bewirken.

Monodisperse Ionenaustauscher erhält man aber auch beispielsweise gemäß EP-A 0 098 130 gemäß:
- a): Vorlegen einer gerührten wässrigen Suspension von vernetzten Saatteilchen, wenigstens im wesentlichen aufweisend ein Polymer aus (i) einer größeren Menge an Einheiten, gebildet aus Monomeren, welches ausgewählt ist aus styrolischen Monomeren, alipha- tischen ethylenisch ungesättigten Monomeren und heterozyklischen aromatischen Verbin- dungen, und (ii) 0,1 bis 3 Gew.-% vernetzenden Monomereinheiten im Falle von Geltyp- Saatteilchen oder 0,1 bis 6 Gew.-% vernetzenden Monomereinheiten im Falle von Saat- teilchen des makroetikularen Typs zu bilden, wobei die gerührte wässrige Suspension in Abwesenheit einer solchen Menge an Schutzkolloid gebildet wird, die ein Aufsaugen des Monomeren in die Saatteilchen verhindert;
- b): Zuführen von Monomeren zu den suspendierten Saatteilchen unter Polymerisations- bedingungen von 0 bis 98 Gew.-% eines monoethylenisch ungesättigten Monomeren, das ausgewählt ist aus styrolischen Monomeren, aliphatischen ethylenischen Monomeren und heterozyklischen aromatischen Verbindungen, und (II) 2 bis 100 Gew.-% eines poly- ethylenisch ungesättigten vernetzenden Monomeren, das aus Divinylpyridin besteht oder aus styrolischen Monomeren und/oder aliphatischen ethylenischen Monomeren aus- gewählt ist, wobei die Suspensionsbedingungen, die Zuführungsgeschwindigkeit, das Rühren und die Polymerisationsgeschwindigkeit derart aufeinander abgestimmt werden, dass eine Teilchenagglomeration vermieden, gehemmt oder auf einem Minimum gehalten wird, bis die Saatteilchen bis zu der gewünschten Größe durch Aufsaugen des Monomeren oder der Monomermischung angequollen sind,
- c): Fortsetzung der Polymerisation der gequollenen Saatteilchen unter Bildung der Co- polymerteilchen und
- d): Abtrennen der Copolymerteilchen von dem wässrigen Suspensionsmedium.

Alternativ erhält man aber auch monodisperse Ionenaustauscher gemäß EP-A 0 101 943 durch:
- a): Ausbilden einer Suspension von Teilchen eines vernetzten Polymeren in einer konti- nuierlichen wässrigen Phase, dann
- b): Quellen der Polymerteilchen mit einer ersten Monomermischung enthaltend 75 bis 99,5 Gewichtsteile eines monoethylenisch ungesättigten Monomeren, 0,5 bis 25 Gewichts- teile eines polyethylenisch ungesättigten Monomeren und eine ausreichende Menge eines im wesentlichen wasserunlöslichen, freie Radikale bildende Starters, um die Polymeri- sation der ersten Monomermischung zu katalysieren, und einer zweiten Monomer- mischung, dann
- c): Polymerisieren der ersten Monomermischung in den Polymerteilchen, bis 40 bis 95 Gewichtsprozent der Monomeren in Polymere umgewandelt sind, dann
- d): Fortsetzung der Zugabe einer zweiten Monomermischung zu dieser Suspension, wobei die zweite Monomermischung ein monoethylenisch ungesättigtes Monomer, jedoch im wesentlichen keine freie Radikale bildenden Starter enthält, wobei die Zugabe der zweiten Monomermischung unter Bedingungen erfolgt, die einschließen eine ausreichende Tempe- ratur, um die frei-radikalische Polymerisation des Monomeren in der zweiten Monomer- mischung auszulösen, so dass die Monomermischung von den Polymerteilchen aufgesaugt wird und die Polymerisation der zweiten Monomermischung in den Polymerteilchen vom freie Radikale bildenden Starter katalysiert wird, der in der ersten Monomermischung ent- halten ist, und wobei die Monomeren der zweiten Monomermischung nach der Poly- merisation 40 bis 90 Gewichtsprozent der Copolymerperlen ausmachen.

Gemäß EP-A 0 448 391 erhält man monodisperse Ionenaustauscher aber auch beispielsweise dadurch, dass man
- a): ein frei radikalisch polymerisierbares wasserunlösliches Monomeres oder ein Gemisch von solchen Monomeren mit einer wässrigen Dispersion von Keimpolymerteilchen gleich- mäßiger Größe kombiniert bis genügend Monomeres oder Gemisch von Monomeren kom- biniert ist, um die Teilchen auf eine gewählten Größe wachsen zu lassen und worin das Monomere oder das Gemisch von Monomeren mit der wässrigen Dispersion von Keim- polymerteilchen (i) in Gegenwart eines Dispersionsstabilisators und eines öllöslichen frei radikalischen Polymerisationsinitiators (ii) bei einer Temperatur kombiniert wird, die wenigstens so hoch ist wie die, bei welcher der Initiator aktiviert wird und (iii) mit solcher Geschwindigkeit, dass eine Menge des Monomeren oder Gemischs von Monomeren gleich dem gesamten anfänglichen Gewicht der Keimpolymerteilchen mit der Dispersion über eine Zeitspanne von 45 bis 120 Minuten kombiniert würde; und
- b): die Temperatur des oder der vereinigten Monomeren und der Teilchen wenigstens so hoch hält wie die, bei welcher der Initiator aktiviert wird bis alles Monomere polymerisiert ist,
wobei diese Stufen gegebenenfalls wiederholt werden, bis die gewählte Größe gleich der gewählten endgültigen Teilchengröße ist.

Gemäß EP-A 0 062 088 erhält man monodisperse Ionenaustauscher aber auch durch
- a): Aufnehmen einer Monomermischung aus nanoethylenisch ungesättigtem Monomer und einem Vernetzer in Saatpolymerisate die zuvor aus einem monoethylenisch ungesättigtem Monomer und wenigstens 0,15 Gew.-% Vernetzer hergestellt wurden, so dass die Saat- polymerisate sich nicht im Monomer-Feed lösen, wobei die Mengen an ethylenisch unge- sättigtem Monomer und Vernetzer für das Saatpolymerisat so gewählt werden, dass die resultierenden Ionenaustauscherharze eine hohe Resistenz gegenüber osmotischem Schock und höhere Stabilität aufweisen,
- b): Polymerisieren des aufgenommenen Monomers zu gefütterten Perlen und
- c): Umsetzung mit entsprechenden Reagenzien zu aktiven Ionenaustauschern, die aus diesen Saatpolymerisaten aufgebaut sind.

Die genannten Literaturstellen und Schutzrechte sollen nur als Beispiele für Herstellungsverfahren vernetzter, funktionalisierter Polystyrol-Perlpolymerisate dienen, die als weitere Komponente mit den Organopolysiloxanpolyethern als freifließende Ionenaustauscher eingesetzt werden können. Sie werden vom Inhalt der vorliegenden Anmeldung mit umfasst. Die Organopolysiloxanpolyether eignen sich aber durchaus auch als Mischungspartner bei vernetzten, funktionalisierten Polystyrol-Perlpolymerisaten, die durch alternative Verfahren erhältlich sind, beispielsweise durch Jetten wie sie aus US-A 5,233,096 bekannt sind, oder aber auch bei anderen durch wässrige Suspension erhaltene Harze.

Bereits in der EP-A 0 868 212 werden Verfahren zur Herstellung freifließender oder temporär freifließender stark saurer Kationenaustauscher hergestellt nach WO 97/23517 beschrieben. Aus den Beispielen geht hervor, dass es sich vorzugsweise um Ionenaustauscher mit heterodisperser Teichengrößenverteilung handelt.

Nach einer Variante der EP-A 0 868 212 wird die freie Fließbarkeit dadurch erreicht, dass der stark saure Kationenaustauscher nach der Filtration mit wässrigen Lösungen oberflächenaktiver. Stoffe behandelt wird. Als oberflächenaktive Stoffe werden dabei nichtionogene Tenside, wie An- I lagerungsprodukte von Ethylen- und Propylenoxid an natürliche Fettalkohole der Kettenlängen C₁₂-C₁₄ oder Alkylphenolpolyethylenglykolether, kationische und amphotere Tenside oder Emulgatoren, wie Fettalkoholpolyalkylenglycolether oder anionische Tenside, wie Paraffinsulfonate genannt. Nachteilig bei diesem Verfahren ist allerdings, dass die Wirkung der Tenside nicht immer dauerhaft ist und dass das Verfahren bei monodispersen Ionenenaustauschern weniger wirksam ist. Außerdem führt das Verfahren der EP-A 0 868 212 bei Anionenaustauschern und Austauschermischungen nicht zu fließfähigen Produkten.

Die Aufgabe der vorliegenden Erfindung war eine alternative Verwendungsmöglichkeit für Organopolysiloxanpolyether zu finden, insbesondere eine Anwendungsmöglichkeit im Zusammenhang mit Polymeren die aus wässriger Suspension erhalten werden.

Gegenstand der vorliegenden Erfindung sind deshalb Stoffgemische auf Basis von Organopolysiloxanpolyethern und mindestens einer weiteren Substanz oder Komponente, bevorzugt einem aus wässriger Suspension erhaltenen Polymer, besonders bevorzugt einem vernetzten, funktionalisierten Polystyrol-Perlpolymerisat sowie die Verwendung solcher Stoffgemische auf Basis von Organopolysiloxanpolyether mit vernetzten, funktionalisierten Polystyrol-Perlpolymerisaten als freifließende Ionenaustauscher oder freifließende Adsorber, besonders bevorzugt freifließende monodisperse oder heterodisperse Anionenaustauscher oder Kationenaustauscher aber auch freifließende Mischungen von Anionen- und Kationenaustauschern.

In einer besonderen Ausführungsform der vorliegenden Erfindung werden die aus wässriger Suspension erhaltenen Polymere, bevorzugt die vernetzten, funktionalisierten Polystyrol-Perlpolymerisate mit dem Organopolysiloxanpolyether in wässriger Suspension unter Einleitung von Luft, Stickstoff oder anderen Gasen und/oder in Anwesenheit eines Öls behandelt bzw. gemischt.

Die erfindungsgemäßen Stoffgemische insbesondere mit vernetzten, funktionalisierten Polystyrol-Perlpolymerisaten eignen sich besonders um die Freifließbarkeit von Ionenaustauschern sicherzustellen, insbesondere für makroporöse oder gelförmige Anionenaustauscher oder Kationenaustauscher, ganz besonders bevorzugt für gelförmige Anionenaustauscher oder gelförmige Kationenaustauscher.

Mit Fließfähigkeit im Sinne der Erfindung ist gemeint, dass die Schüttung des Ionenaustauschers unter Einfluss der Schwerkraft ohne Anwendung zusätzlicher Kräfte transportiert werden kann. In der Praxis erfolgt die Bewertung der freien Fließfähigkeit beispielsweise mit einem Trichtertest, der in der EP-A 0 868 212 beschrieben ist.

Die erfindungsgemäßen Stoffgemische insbesondere mit vernetzten, funktionalisierten Polystyrol-Perlpolymerisaten erlauben das Einstellen dauerhaft freifließender Ionenaustauscher. Besonders wertvoll ist dies für gelförmige Ionenaustauscher, die im allgemeinen ohne besondere Nachbehandlung nur sehr schlecht fließfähig sind. Gut geeignet ist die Anwendung der Organopolysiloxanpolyether bei stark sauer oder stark basisch oder mittel basisch funktionalisierten Polystyrol-Perlpolymerisaten sowie deren Mischungen. Besonders gut geeignet ist das Verfahren zur Herstellung fließfähiger vernetzter, funktionalisierter Polystyrol-Perlpolymerisate gemäß EP-A 1 000 659 (Kationenaustauscher) und gemäß EP-A 1000 660 (Anionenaustauscher). Sowohl der Inhalt der EP-A 1 000 659 als auch der Inhalt EP-A 1 000 660 werden von der vorliegenden Anmeldung mit umfasst.

Gemäß EP-A 1 000 659 erhält man monodisperse gelförmige Polystyrol-Perlpolymerisate durch
- a): Ausbilden einer Suspension von Saatpolymerisat in einer kontinuierlichen wässrigen Phase,
- b): Quellen des Saatpolymerisates in einem Monomergemisch aus Vinylmonomer, Vernetzer und Radikalstarter,
- c): Polymerisieren des Monomergemisches im Saatpolymerisat,
- d): Funktionalisieren des gebildeten Copolymerisates durch Sulfonierung, dadurch gekenn- zeichnet, dass das Saatpolymerisat ein vernetztes Polymerisat mit einem Quellungsindex von 2,5 bis 7,5 (gemessen in Toluol) ist und einen Gehalt an nicht verdampfbaren, löslichen Anteilen (gemessen durch Extraktion mit Tetrahydrofuran) von weniger als 1 Gew.-% hat.

In einer besonderen Ausführungsform der EP-A 1 000 659 wird als Saatpolymerisat ein vernetztes Polymerisat, hergestellt aus
i) 96,5 bis 99,0 Gew.-% Monomer,
ii) 0,8 bis 2,5 Gew.-% Vernetzer und
iii) 0,2 bis 1,0 Gew.-% aliphatischer Peroxyester als Polymerisationsinitiator, verwendet.

Gemäß EP-A 1 000 660 erhält man monodisperse gelförmige Polystyrol-Perlpolymerisate durch
a) Ausbilden einer Suspension von Saatpolymerisat in einer kontinuierlichen wässrigen. Phase,
b) Quellen des Saatpolymerisates in einem Monomergemisch aus Vinylmonomer, Vernetzer und Radikalstarter,
c) Polymerisieren des Monomergemisches im Saatpolymerisat,
d) Funktionalisieren des gebildeten Copolymerisates durch Chlormethylierung und anschließende Aminierung,
dadurch gekennzeichnet, dass das Saatpolymerisat ein vernetztes Polymerisat mit einem Quellungsindex von 2,5 bis 7,5 (gemessen in Toluol) und mit einem Gehalt an nicht verdampfbaren, löslichen Anteilen (gemessen durch Extraktion mit Tetrahydrofuran) von weniger als 1 Gew.-% ist.

In einer besonderen Ausführungsform der EP-A 1 000 660 wird als Saatpolymerisat ein vernetztes Polymerisat, hergestellt aus
i) 96,5 bis 99,0 Gew.-% Monomer,
ii) 0,8 bis 2,5 Gew.-% Vernetzer und
iii) 0,2 bis 1,0 Gew.-% aliphatischer Peroxyester als Polymerisationsinitiator, verwendet.

Bei den Organopolysiloxanpolyethern handelt es sich um oligomere oder polymere Verbindungen mit Organopolysiloxansequenzen und Polyethersequenzen.

Die Organopolysiloxansequenzen bestehen vorzugsweise aus Polyalkylsiloxansequenzen, in ganz bevorzugter Weise aus Polymethylsiloxansequenzen. Die Polyethersequenzen sind vorzugsweise aus Etylenoxid-, Propylenoxyd oder Mischungen aus Propylenoxyd und Ethylenoxyd aufgebaut. Die Organopolysiloxanpolyether können eine Block- oder Kammstruktur aufweisen. Organopolysiloxanpolyether, die zusätzlich Alkylgruppen, Aminogruppen, Hydroxygruppen, Acryloxygruppen und/oder Carboxygruppen enthalten sind ebenfalls gut geeignet. Polyethermodifizierte Trisiloxane, d.h. Organopolysiloxanpolyether mit Polysiloxansequenzen aus drei Siloxaneinheiten, sind ebenfalls gut geeignet.

Besonders gut geeignete Organopolysiloxanpolyether im Sinne der vorliegenden Erfindung entsprechen den Formeln I 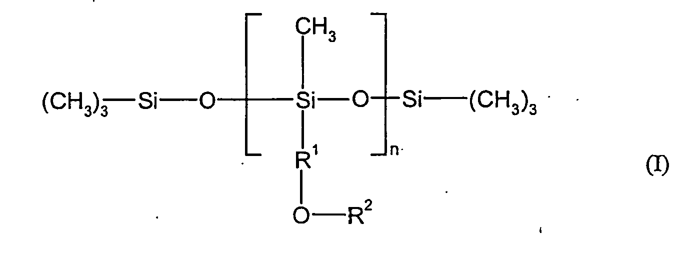 worin
R¹ ein zweiwertiger, gegebenenfalls verzweigter Alkylenrest mit 3 bis 6 Kohlenstoffatomen in der Alkylenkette ist,
R² ein Rest der Formel (CₘH₂ₘO-)ₛR³ ist, in der m eine Zahl von >2,0 und ≦2,5, s eine zahl von 4 bis 21 und R³ ein Wasserstoffrest, ein Alkylrest mit 1 bis 4 Kohlenstoffatomen oder ein Acetylrest ist, wobei jedoch, wenn der Rest R¹ nur 3 oder 4 Kohlenstoffatome aufweist, eine blockweise Anordnung der Oxyalkyleneinheiten entsprechend der Formel (C₃H₆O-)ₚ(C₂H₄O-)_{q}(C₃H₆O-)ᵣR³ einzuhalten ist, in der p eine Zahl von 1 bis 3, q eine Zahl von 4 bis 15 und r eine Zahl von 0 bis 3 ist,
n eine Zahl von 1 bis 3 ist,
mit der Maßgabe, dass mindestens 50 Mol-% der Oxyalkylengruppen Oxyethylengruppen sind.
R¹ ist ein zweiwertiger, gegebenenfalls verzweigter Alkylenrest mit 3 bis 6 Kohlenstoffatomen in der Alkylenkette.

Beispiele solcher Reste sind die Reste -(CH₂)₃-, -(CH₂)₄-, -(CH₂)₆-,

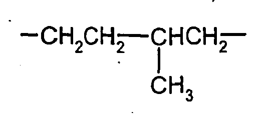

Besonders bevorzugt ist der Rest -(CH₂)₃- und der Rest -(CH₂)₆-.
R² kann zwei verschiedene Bedeutungen haben, die von der Anzahl der Kohlenstoffatome im Rest R¹ abhängen:
R² hat allgemein die Bedeutung des Restes (Cₘ,H₂ₘO-)ₛR³, wobei m eine Zahl von >2,0 und ≦2,5 und s eine Zahl von 4 bis 21 ist. Der Index m ergibt sich aus dem Verhältnis von Oxyethylen- zu Oxypropyleneinheiten im Polyether und kann jeden beliebigen Wert von >2,0 und ≦2,5 annehmen. Hat m einen Wert von 2,5, bedeutet dies für den Fall, dass außer Oxyethyleneinheiten nur Oxypropyleneinheiten vorhanden sind, dass 50 Mol-% der Oxyalkyleneinheiten Oxyethyleneinheiten und 50 Mol-% der Oxyalkyleneinheiten Oxypropyleneinheiten sind. Die Gesamtzahl der Oxyalkyleneinheiten ist durch den Wert des Index s gegeben.

Die Anordnung der Oxyalkyleneinheiten kann statistisch oder blockweise erfolgen. Ist jedoch die Kohlenstoffanzahl des Restes R¹ gleich 3 oder 4, ist nur die blockweise Anordnung der Oxyalkylengruppen zulässig, so dass der Rest R² dann der Formel (C₃H₆O-)ₚ(C₂H₄O-)_{q}(C₃H₆O-)ᵣR³ entsprechen muss, wobei p eine Zahl von 1 bis 3, q eine Zahl von 4 bis 15 und r eine Zahl von 0 bis 3 ist. Die Indices p, q und r sind dabei Durchschnittswerte. Weist der Rest R¹ 3 oder 4 Kohlenstoffatome auf, beginnt die Polyoxyalkylenkette des Restes R² mit mindestens einer Oxypropyleneinheit. Hierdurch wird gewährleistet, dass auch bei niedriger Kohlenstoffanzahl des Restes R¹ die erfindungsgemäßen Verbindungen die gewünschte Hydrolysestabilität aufweisen.

n gibt die Anzahl der difunktionellen Siloxy-Einheiten an und hat einen Wert von 1 bis 3.

Um die Wasserlöslichkeit und die Netzeigenschaften des Organopolysiloxanpolyethers sicherzustellen, muss die Bedingung erfüllt sein, dass mindestens 50 Mol-% der Oxyalkylengruppen Oxyethylengruppen sind.

Vorzugsweise hat der Rest -R¹-O-R² eine Molmasse von 400 bis 700.

R³ ist ein Wasserstoffresf, ein Alkylrest mit 1 bis 4 Kohlenstoffatomen oder ein Acetylrest. Bevorzugt ist R³ ein Wasserstoffrest.

Der Inhalt der EP-A 0 612 754 B 1 wird von der vorliegenden Anmeldung mit umfasst.

Geeignete Organopolysiloxanpolyether im Sinne der vorliegenden Erfindung sind aber auch das 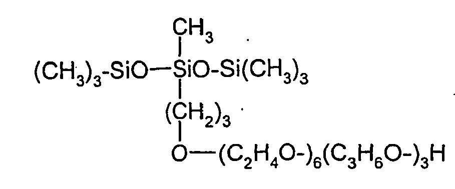 (TEGO^{®}wet 255, Firma Tego Chemie Service GmbH)
sowie die Verbindungen gemäß US-A 3,299,112 deren Inhalt von der vorliegenden Anmeldung mit umfasst wird und worin die Verbindungen der Siloxane mit einer Gruppe der Formel (A) 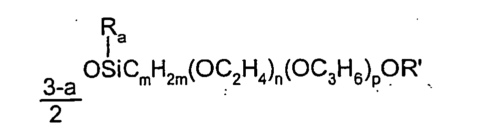 und 1 bis 4 Gruppen der Formel (B) 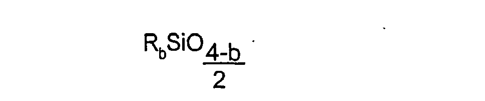 beschrieben werden worin
a für 0 bis 2 steht
b für 2 bis 3 steht
R für Methyl oder Ethyl steht
R' für eine Alkylgruppe mit 1 bis 4 Kohlenstoffatomen steht
m für 2 bis 4 steht
n für 4 bis 17 steht
p für 0 bis 5 steht,
das Verhältnis n zu p wenigstens 2 zu 1 ist
n + p für 4 bis 17 steht
und die Alkoxypoly(ethylenoxy)gruppe aus Siliciumatom von (A) über wenigstens 2 Kohlenstoffatome einer CₘH₂ₘ-Gruppe gebunden ist.

Ganz besonders gut geeignete Organopolysiloxanpolyether im Sinne der vorliegenden Erfindung entsprechen der Formel II, m und IV. 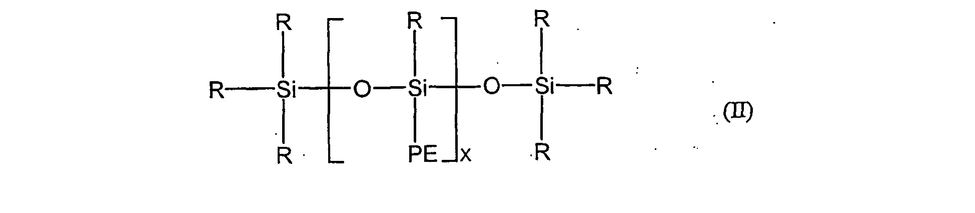 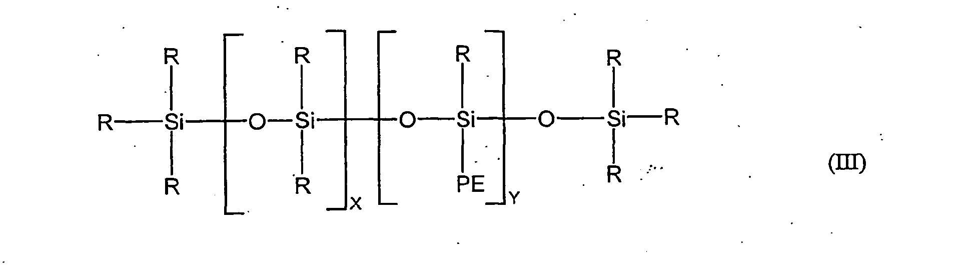 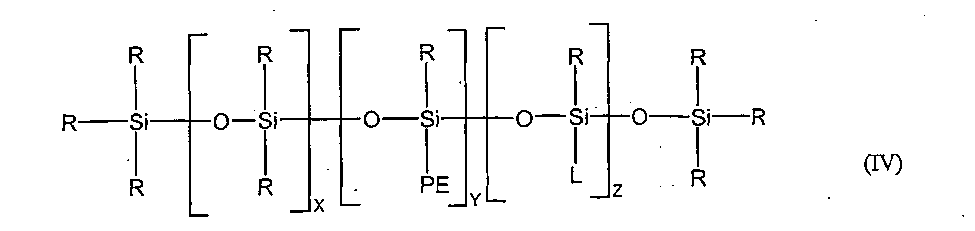 worin
PE für (CH₂)₃-O-(C₂H₄O)ₙ(C₃H₆O)ₘ-CH₃ mit n, m unabhängig von einander für eine ganze Zahl von 1 bis 100 steht,
X für 1 bis 200, vorzugsweise für 1 bis 25 steht,
Y für 1 bis 50, vorzugsweise für 2 bis 10 steht,
Z für 1 bis 50, vorzugsweise für 2 bis 10 steht,
L für C₂ bis C₁₈-Alkyl, bevorzugt für C₂ bis C₈-Alkyl steht und
R für C₁ bis C₄-Alkyl, bevorzugt für C₁ bis C₅-Alkyl, besonders bevorzugt für Ethyl oder Methyl, ganz besonders bevorzugt für Methyl steht,
wie sie im Produktkatalog Degussa Performance Chemicals, Goldschmidt Industrial Specialities, Product Catalogue Functional Materials Inv.-Nr. 31-01 von 02/2002 beschrieben sind.

Insbesondere bevorzugt erfindungsgemäß zu verwendende Organopolysiloxanpolyether haben die Formeln 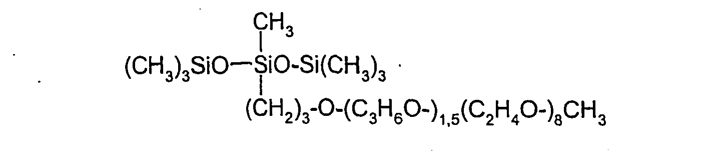 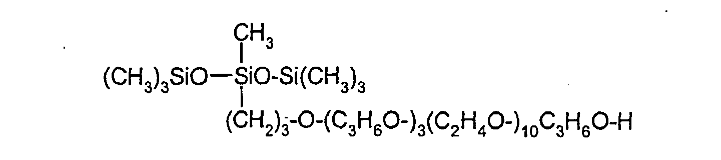 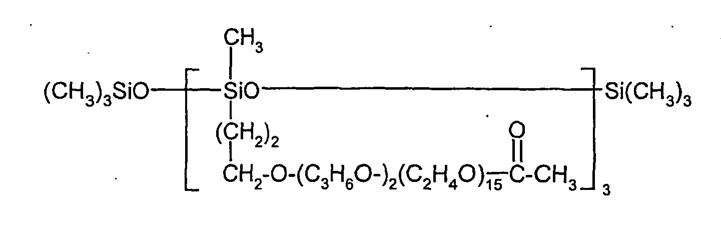 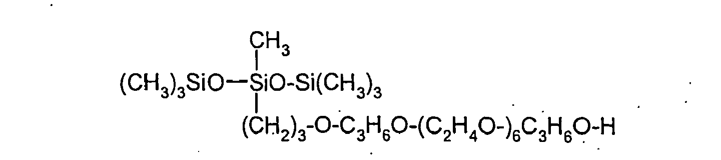 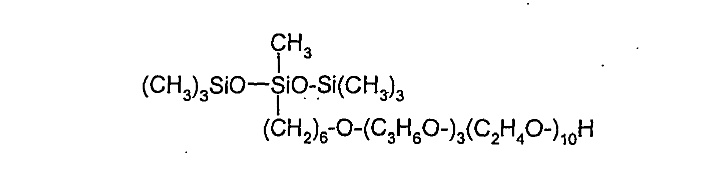 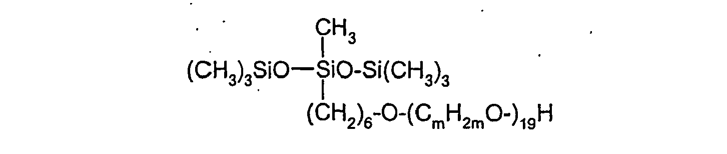 worin
m für 2 oder 4 steht.

Die Organopolysiloxanether der Firma Degussa werden unter der Marke Tegopren^{®} vertrieben. Erfindungsgemäß insbesondere bevorzugt eignen sich für vernetzte, funktionalisierte Polystyrol-Perlpolymerisate Tegopren^{®} 5840 und Tegopren^{®} 5847.

Die Molmassen (Gewichtsmittel) der erfindungsgemäß geeigneten Organopolysiloxanpolyether beträgt 200 bis 20 000, vorzugsweise 300 bis 3000, besonders bevorzugt 400 bis 1000.

Die Organopolysiloxanpolyether werden in einer Menge von 0,4 g bis 15 g, vorzugsweise in einer Menge von 1 g bis 8 g pro Liter vernetztem, funktionalisiertem Polystyrol-Perlpolymerisat eingesetzt.

Die Behandlung des vernetzten, funktionalisierten Polystyrol-Perlpolymerisats mit einem Organopolysiloxanpolyether kann als feuchtes Produkt auf einer Nutsche, in wässriger Suspension in einem Reaktor oder als Festbett oder Wirbelbett in einer. Säule durchgeführt werden. Bevorzugt erfolgt die Behandlung in einer Säule, wobei der Örganopolysiloxanpolyether gelöst in 0,2 bis 10 1 Wasser, vorzugsweise 0,3 bis 3 1 Wasser, zugesetzt wird.

Es hat sich als sehr zweckmäßig erwiesen, während der Behandlung Luft, Stickstoff oder ein anderes inertes Gas durch die wässrige Suspension zu leiten. Auf diese Weise werden Ionenaustauscher mit besonders günstigen Fließeigenschaften erhalten.

In einer besonderen Ausführungsform der vorliegenden Erfindung erfolgt die Behandlung des vernetzten, funktionalisierten Polystyrol-Perlpolymerisats mit Organopolysiloxanpolyether in Anwesenheit eines Öls. Das Öl setzt die Schaümbildung bei der Anwendung von Luft oder Stickstoff herab und beeinträchtigt nicht die Wirkung des Organopolysiloxanpolyethers.

Als Öl werden Stoffe auf der Basis von organischen Ölen, organisch modifizierten Siloxane, Siliconen, Mineralölen, Polyethern und anderen hydrophoben Stoffen eingesetzt. Bevorzugt werden Mineralöle oder Siliconöle auf der Basis von Polydimethylsiloxan eingesetzt. Gut geeignet sind auch Mischungen verschiedener Öle.

Die Öle werden in einer Menge von 0,2 g bis 8g, vorzugsweise in einer Menge von 0,5 g bis 4 g pro Liter vernetztem, funktionalisiertem Polystyrol-Perlpolymerisat eingesetzt.

Die erfindungsgemäß erhältlichen freifließenden Stoffgemische, insbesondere die freifließenden monodispersen oder heterodispersen Ionenaustauscher weisen eine außerordentlich gute Fließfähigkeit auf, die auch nach längerer Lagerzeit von mehreren Monaten auch bei erhöhter Temperatur (z.B. 50°C) oder tiefer Temperatur (z.B. -10°C) voll erhalten bleibt. Die Produkte eignen sich besonders gut für die Befüllung von Filtern und Kartuschen.

Aufgrund der außerordentlichen Freifließbarkeit sind die mit Organopolysiloxanpolyethern behandelten Anionenaustauscher und Kationenaustauscher für zahlreiche Anwendungen geeignet.

Die vorliegende Erfindung betrifft deshalb auch die Verwendung von Stoffgemischen aus Organopolysiloxanpolyethern und vernetzten, zu Anionenaustauschern funktionalisierten Polystyrol-Perlpolymerisaten
- zur Entfernung von Anionen aus wässrigen oder organischen Lösungen oder deren Dämpfen
- zur Entfernung von Anionen aus Kondensaten,
- zur Entfernung von Farbpartikeln aus wässrigen oder organischen Lösungen,
- zur Entfärbung und Entsalzung von Glucoselösungen, Molken, Gelatinedünnbrühen, Fruchtsäften, Fruchtmosten oder Zuckern, bevorzugt von Mono- oder Disacchariden, insbesondere Fructoselösungen, Rohrzucker, Rübenzuckerlösung, beispielsweise in der Zuckerindustrie, Molkereien, Stärke- und in der Pharmaindustrie,
- zur Entfernung von organischen Komponenten aus wässrigen Lösungen, beispielsweise von Huminsäuren aus Oberflächenwasser,
- zur Reinigung und Aufarbeitung von Wässern in der chemischen Industrie und Elektronikindustrie, insbesondere zur Herstellung von Reinstwasser,
- in Kombination mit gelförmigen und/oder makroporösen Kationenaustauschern zur Vollentsalzung wässriger Lösungen und/oder Kondensaten, insbesondere in der Zuckerindustrie.

Die vorliegende Erfindung betrifft ferner
- Verfahren zur Entfernung von Anionen, bevorzugt Anionen starken Säuren, wie Chlorid, Sulfat, Nitrat aus wässrigen oder organischen Lösungen und deren Dämpfen,
- Verfahren zur Entfernung von Anionen, bevorzugt von Anionen starker Säuren wie Chlorid, Sulfat, Nitrat aus Kondensaten,
- Verfahren zur Entfernung von Farbpartikeln aus wässrigen oder organischen Lösungen,
- Verfahren zur Entfärbung und Entsalzung von Glucoselösungen, Molken, Gelatinedünnbrühen, Fruchtsäften, Fruchtmosten oder Zuckern, bevorzugt von Mono- oder Disacchariden, insbesondere Rohrzucker, Fructose- oder Rübenzuckerlösungen, beispielsweise in der Zucker-, Stärke- oder Pharmaindustrie oder in Molkereien,

Verfahren zur Entfernung von organischen Komponenten aus wässrigen Lösungen, beispielsweise von Huminsäuren aus Oberflächenwasser
unter Einsatz von Stoffgemischen aus Organopolysiloxanpolyether und vernetzten, zu Anionenaustauschern funktionalisierten Polystyrol-Perlpolymerisaten.

Gegenstand der vorliegenden Erfindung ist aber auch die Verwendung von Stoffgemischen aus Organopolysiloxanpolyethern mit vernetzten, zu Kationenaustauschern funktionalisierten Polystyrol-Perlpolymerisaten
- zur Entfernung von Kationen, Farbpartikeln oder organischen Komponenten aus wässrigen oder organischen Lösungen und Kondensaten, wie z.B. Prozess- oder Turbinenkondensate,
- zur Enthärtung im Neutralaustausch von wässrigen oder organischen Lösungen und Kondensaten, wie z.B. Prozess- oder Turbinenkondensaten,
- zur Reinigung und Aufarbeitung von Wässern der chemischen Industrie, der ElektronikIndustrie und von Kraftwerken,
- zur Vollentsalzung wässriger Lösungen und/oder Kondensate, dadurch gekennzeichnet dass man diese in Kombination mit gelförmigen und/oder makroporösen Anionenaustauschern einsetzt,
- zur Entfärbung und Entsalzung von Molken, Gelatinedünnbrühen, Fruchtsäften, Fruchtmosten und wässrigen Lösungen von Zuckern,
- zur Trinkwasseraufbereitung oder zur Herstellung von Reinstwasser (notwendig bei der Mikrochip-Herstellung für die Computerindustrie), zur chromatographischen Trennung von Glucose und Fructose und als Katalysatoren für verschiedene chemische Reaktionen (wie z.B. bei der Bisphenol-A-Herstellung aus Phenol und Aceton).

Die vorliegende Erfindung betrifft deshalb auch
- Verfahren zur Vollentsalzung wässriger Lösungen und/oder Kondensate, wie z.B. Prozessoder Turbinenkondensate, dadurch gekennzeichnet, dass man erfindungsgemäß mit Organopolysiloxanpolyethern behandelte Kationenaustauscher in Kombination mit heterodisperse oder monodispersen, gelförmigen und/oder makroporösen Anionenaustauschern einsetzt,
- Kombinationen von erfindungsgemäß mit Organopolysiolxanpolyethern behandelten Kationenaustauschern mit heterodispersen oder monodispersen, gelförmigen und/oder makroporösen Anionenaustauschern zur Vollentsalzung wässriger Lösungen und/oder Kondensate, wie z.B. Prozess- oder Turbinenkondensate,
- Verfahren zur Reinigung und Aufarbeitung von Wässern der chemischen, der ElektronikIndustrie und von Kraftwerken, dadurch gekennzeichnet, dass man erfindungsgemäß mit Organopolysiloxanpolyethern behandelte Kationenaustauscher einsetzt,
- Verfahren zur Enthärtung im Neutralaustausch von wässrigen oder organischen Lösungen und Kondensaten, wie z.B. Prozess- oder Turbinenkondensate, dadurch gekennzeichnet, dass man erfindungsgemäß mit Organopolysiloxanpolyethern behandelte Kationenaustauscher einsetzt,
- Verfahren zur Entfärbung und Entsalzung von Molken, Gelatinedünnbrühen, Fruchtsäften, Fruchtmosten und wässrigen Lösungen von Zuckern in der Zucker-, Stärke- oder Pharmaindustrie oder Molkereien, dadurch gekennzeichnet, dass man Stoffgemische aus Organopolysilxanpolyethern und vernetzten, zu Kationenaustauschern funktionalisierte Polystyrol-Perlpolymerisate einsetzt.

### Beispiele

### Prüfung der Fließfähigkeit

### Beschreibung des Trichters zur Prüfung der Fließbarkeit

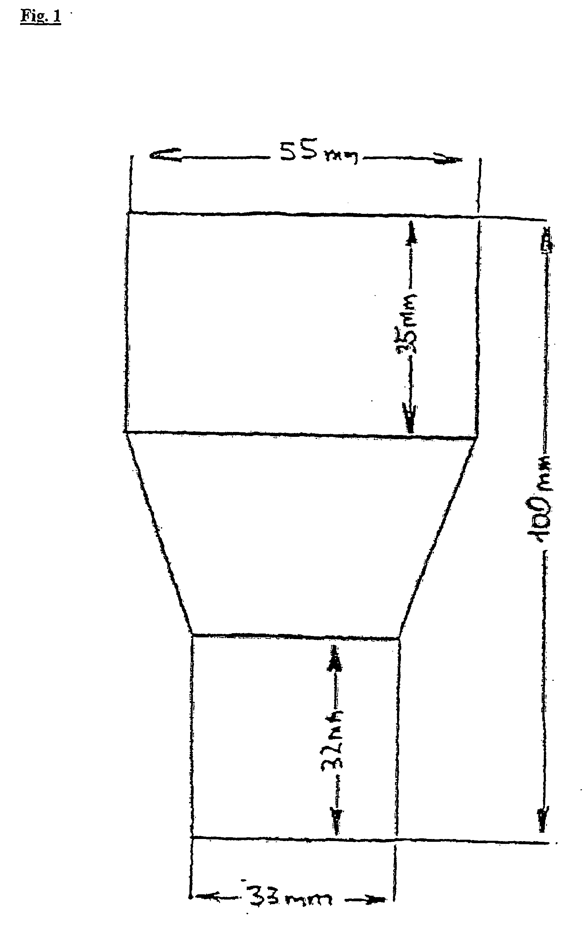

Das zu prüfende Harzmuster wird von oben in den unten verschlossenen Trichter (Fig. 1) eingefüllt, wobei der Trichter vollständig mit Harz gefüllt wird. Zur Prüfung der Fließfähigkeit wird die untere Öffnung des Trichters geöffnet und die Zeit bis zur vollständigen Entleerung des Trichters gemessen. Als fließfähig gilt ein Harz, wenn der Trichter in einer angemessenen Zeit vom Harz frei geflossen ist. Angemessen im Sinne der vorliegenden Erfindung ist die Zeit, die in der Praxis zum Befüllen einer Kartusche mit Harzmaterial zur Verfügung steht. Nicht fließfähige Harze verbleiben im Trichter und fließen nicht ab

### Beispiel 1 Vergleich ohne oberflächenaktiven Stoff

In eine Glassäule mit einem Durchmesser von 15 cm und einer Länge von 70 cm werden 500 ml zum Kationenaustauscher funktionalisiertes Polystyrol-Perlpolymerisat, hergestellt nach EP-A 1 000 659 eingefüllt. Von unten werden in 40 Minuten 360 ml Wasser durchgepumpt. Anschließend lässt man das Wasser wieder abfließen und pumpt es von neuem durch das Harz. Danach wird 30 Minuten lang Luft durch die Suspension geblasen. Die gesamte Suspension wird auf eine Nutsche gegeben und 5 Minuten lang abgesaugt. Von der abgesaugten Harzmasse wird eine Teilmenge in den Trichter gefüllt zur Bestimmung der Fließfähigkeit. Die Harzmasse fließt nicht aus dem Trichter ab.

### Beispiel 2 Vergleich mit oberflächenaktivern Stoff gemäß EP-A 0 868 212

In eine Glassäule mit einem Durchmesser von 15 cm und einer Länge von 70 cm werden 500 ml zum Kationenaustauscher funktionalisiertes Polystyrol-Perlpolymerisat, hergestellt nach EP-A 1 000 659 eingefüllt. Von unten werden in 40 Minuten 360 ml einer 0,5 gew.-%igen wässrigen Lösung des Emulgators Mersolat K 30^{®}, einem anionischen Tensid vom Typ der Paraffinsulfonate gemäß EP-A 0 868 212, durchgepumpt. Anschließend lässt man die Lösung wieder abfließen und pumpt sie nochmals durch das Harz. Danach wird 30 Minuten lang Luft durch die Suspension geblasen. Die gesamte Suspension wird auf eine Nutsche gegeben und 5 Minuten lang abgesaugt. Von der abgesaugten Harzmasse wird eine Teilmenge in den Trichter zur Bestimmung der Fließfähigkeit gefüllt. Die Harzmasse fließt nicht aus dem Trichter ab.

### Beispiele 3 (erfindungsgemäß)

In eine Glassäule, Durchmesser 15 cm, Länge 70 cm, werden 500 ml nicht fließfähiges zum Kationenaustauscher funktionalisiertes Polystyrol-Perlpolymerisat, hergestellt nach EP-A 1 000 659 eingefüllt. Von unten werden in 40 Minuten 360 g einer wässrigen Lösung, die 0,5 gew.-%ig alkoxylierten Organopolysiloxanpolyether Tegopren^{®} 5840 sowie 0,25 Gew.-% Entschäumer enthält, durchgepumpt. Anschließend lässt man die Lösung wieder abfließen und pumpt sie von neuem durch das Harz. Die gesamte Suspension wird auf eine Nutsche zugegeben und 5 Minuten lang abgesaugt. Von der abgesaugten Harzmasse wird eine Teilmenge in den Trichter zur Bestimmung der Fließfähigkeit gefüllt. Die Harzmasse fließt in 3 Sekunden vollständig aus dem Trichter ab.

### Beispiel 4 (erfindungsgemäß)

In eine Glassäule, Durchmesser 15 cm, Länge 70 cm, werden 500 ml nicht fließfähiges zum Kationenaustauscher funktionalisiertes Polystyrol-Perlpolymerisat, hergestellt nach EP-A 1 000 659 eingefüllt. Von unten werden in 40 Minuten 360 ml einer wässrigen Lösung, die 0,5 Gew.-% alkoxylierten Organopolysiloxanpolyethern Tegopren^{®} 5847 sowie 0,25 Gew.-% Entschäumer enthält, durchgepumpt. Anschließend lässt man die Lösung wieder abfließen und pumpt sie von neuem durch das Harz. Danach wird 30 Minuten lang Luft durch die Suspension geblasen. Die gesamte Suspension wird auf eine Nutsche gegeben und 5 Minuten lang abgesaugt. Von der abgesaugten Harzmasse wird eine Teilmenge in den Trichter zur Bestimmung der Fließfähigkeit gefüllt. Die Harzmasse fließt in 2 Sekunden vollständig aus dem Trichter ab.

### Beispiel 5

In eine Glassäule, Durchmesser 15 cm, Länge 70 cm, werden 500 ml einer Mischung bestehend aus 250 ml nicht fließfähigem vernetzten und zum Kationenaustauscher funktionalisiertes Polystyrol-Perlpolymerisat, hergestellt nach EP-A 1000 659, sowie 250 ml nicht fließfähigem vernetzten und zum Anionenaustauscher funktionalisiertes Polystyrol-Perlpolymerisat, hergestellt nach EP-A 1 000 660, eingefüllt. Von unten werden in 40 Minuten 360 ml Wasser durchgepumpt. Anschließend lässt man das Wasser wieder abfließen und pumpt es von neuem durch das Harz. Von der abgesaugten Harzmasse wird eine Teilmenge in den Trichter zur Bestimmung der Fließfähigkeit gefüllt. Die Harzmasse fließt nicht aus dem Trichter ab.

### Beispiel 6 (erfindungsgemäß)

In eine Glassäule, Durchmesser 15 cm, Länge 70 cm, werden 500 ml einer Mischung bestehend aus 250 ml nicht fließfähigem vernetzten und zum Kationenaustauscher funktionalisiertes Polystyrol-Perlpolymerisat, hergestellt nach EP-A 1 000 659, sowie 250 ml nicht fließfähigem vernetzten und zum Anionenaustauscher funktionalisiertes Polystyrol-Perlpolymerisat, hergestellt nach EP-A 1 000 660, eingefüllt. Von unten werden in 40 Minuten 360 ml eine wässrige Lösung, die 0,5 Gew.-% alkoxylierten Organopolysiloxanpolyether Tegopren^{®} 5840 sowie 0,25 Gew.-% Entschäumer enthält, durchgepumpt. Anschließend lässt man die Lösung wieder abfließen und pumpt sie anschließend von neuem durch das Harz. Von der abgesaugten Harzmasse wird eine Teilmenge in den Trichter zur Bestimmung der Fließfähigkeit gefüllt. Die Harzmasse fließt in 2 Sekunden aus dem Trichter ab.

## Patentansprüche

1. Stoffgemische auf Basis von Organopolysiloxanpolyether, **dadurch gekennzeichnet, dass** als weitere Substanz oder Komponente ein aus wässriger Suspension erhaltenes Polymer, bevorzugt ein vernetztes, funktionalisiertes Polystyrol-Perlpolymerisat eingesetzt wird.

2. Verwendung der Stoffgemische gemäß Anspruch 1, als freifließende Ionenaustauscher oder freifließende Adsorber, bevorzugt freifließende monodisperse oder heterodisperse Ionenaustauscher.

3. Stoffgemische gemäß Anspruch 1, **dadurch gekennzeichnet, dass** sie neben einem Organopolysiloxanpolyether vernetzte zu Kationenaustauschern funktionalisierte Polystyrol-Perlpolymerisate und/oder zu Anionenaustauschern funktionalisierte Polystyrol-Perlpolymerisate enthalten.

4. Verfahren zur Herstellung freifließender Ionenaustauscher, **dadurch gekennzeichnet, dass** man einen Organopolysiloxanpolyether und ein vernetztes, funktionalisiertes Polystyrol-Perlpolymerisat mischt.

5. Stoffgemische nach Anspruch 1, **dadurch gekennzeichnet, dass** der Organopolysiloxanpolyether eine Molmasse von 200 bis 20 000 aufweist.

6. Verfahren gemäß Anspruch 4, **dadurch gekennzeichnet, dass** eine Kombination aus Organopolysiloxanpolyether und Öl angewendet wird.

7. Verfahren gemäß Anspruch 4, **dadurch gekennzeichnet, dass** der Organopolysiloxanpolyether in einer Menge von 0,4 g bis 15 g pro Liter vernetztem, funktionalisierten Polystyrol-Perlpolymerisat eingesetzt wird.

8. Verfahren gemäß Anspruch 4, **dadurch gekennzeichnet, dass** der Organopolysiloxanpolyether in 0,5 Gramm bis 20 Gramm pro Liter wässriger Lösung angewendet wird.

9. Verfahren gemäß Anspruch 6, **dadurch gekennzeichnet, dass** das Öl in einer Menge von 0,2 g bis 8 g pro Liter vernetztem, funktionalisierten Polystyrol-Perlpolymerisat eingesetzt wird.

10. Verfahren gemäß Anspruche 4, **dadurch gekennzeichnet, dass** die Behandlung der vernetzten, funktionalisierten Polystyrol-Perlpolymerisate in wässriger Suspension zusätzlich unter Einleitung von Luft, Stickstoff oder anderen Gasen erfolgt.

11. Verwendung der Stoffgemische gemäß Anspruch 1 zur Befüllung von Kartuschen und Filtern..

12. Kartuschen enthaltend ein Stoffgemisch gemäß Anspruch 1.

13. Verwendung von Stoffgemischen aus Organopolysiloxanpolyethern und vernetzten, zu Anionenaustauschern funktionaliserten Polystyrol-Perlpolymerisaten
- zur Entfernung von Anionen aus wässrigen oder organischen Lösungen oder deren Dämpfen
- zur Entfernung von Anionen aus Kondensaten,
- zur Entfernung von Farbpartikeln aus wässrigen oder organischen Lösungen,
- zur Entfärbung und Entsalzung von Glucoselösungen, Molken, Gelatinedünnbrühen, Fruchtsäften, Fruchtmosten oder Zuckern, bevorzugt von Mono- oder Disacchariden, insbesondere Fructoselösungen, Rohrzucker, Rübenzuckerlösung, beispielsweise in der Zuckerindustrie, Molkereien, Stärke- und in der Pharmaindustrie,
- zur Entfernung von organischen Komponenten aus wässrigen Lösungen, beispielsweise von Huminsäuren aus Oberflächenwasser,
- zur Reinigung und Aufarbeitung von Wässern in der chemischen Industrie und Elektronikindustrie, insbesondere zur Herstellung von Reinstwasser,
- in Kombination mit gelförmigen und/oder makroporösen Kationenaustauschern zur Vollentsalzung wässriger Lösungen und/oder Kondensaten, insbesondere in der Zuckerindustrie.

14. Verwendung von Stoffgemischen aus Organopolysiloxanpolyether mit vernetzten, zu Kationenaustauschern funktionalisierten Polystyrol-Perlpolymerisaten
- zur Entfernung von Kationen, Farbpartikeln oder organischen Komponenten aus wässrigen oder organischen Lösungen und Kondensaten, wie z.B. Prozess- oder Turbinenkondensaten,
- zur Enthärtung im Neutralaustausch von wässrigen oder organischen Lösungen und Kondensaten, wie z.B. Prozess- oder Turbinenkondensaten,
- zur Reinigung und Aufarbeitung von Wässern der chemischen Industrie, der Elektronik-Industrie und von Kraftwerken,
- zur Vollentsalzung wässriger Lösungen und/oder Kondensate, **dadurch gekennzeichnet, dass** man diese in Kombination mit gelförmigen und/oder makroporösen Anionenaustauschern einsetzt,
- zur Entfärbung und Entsalzung von Molken, Gelatinedünnbrühen, Fruchtsäften, Fruchtmosten und wässrigen Lösungen von Zuckern,
- zur Trinkwasseraufbereitung oder zur Herstellung von Reinstwasser (notwendig bei der Mikrochip-Herstellung für die Computerindustrie), zur chromatographischen Trennung von Glucose und Fructose und als Katalysatoren für verschiedene chemische Reaktionen (wie z.B. bei der Bisphenol-A-Herstellung aus Phenol und Aceton).

## Claims

1. Mixtures of substances based on organopolysiloxane polyether, **characterized in that**, as further substance or component, use is made of a polymer obtained from aqueous suspension, preferably crosslinked functionalized polystyrene polymer beads.

2. Use of the mixtures of substances according to Claim 1 as free-flowing ion exchangers or free-flowing adsorbers, preferably free-flowing monodisperse or heterodisperse ion exchangers.

3. Mixtures of substances according to Claim 1, **characterized in that**, in addition to an organopolysiloxane polyether, they comprise crosslinked polystyrene polymer beads functionalized to form cation exchangers and/or polystyrene polymer beads functionalized to form anion exchangers.

4. Process for producing free-flowing ion exchangers, **characterized in that** an organopolysiloxane polyether and crosslinked functionalized polystyrene polymer beads are mixed.

5. Mixtures of substances according to Claim 1, **characterized in that** the organopolysiloxane polyether has a molar mass of 200 to 20 000.

6. Process according to Claim 4, **characterized in that** a combination of organopolysiloxane polyether and oil is used.

7. Process according to Claim 4, **characterized in that** the organopolysiloxane polyether is used in an amount of 0.4 g to 15 g per litre of crosslinked functionalized polystyrene polymer beads.

8. Process according to Claim 4, **characterized in that** the organopolysiloxane polyether is used in an amount of 0.5 gram to 20 gram per litre of aqueous solution.

9. Process according to Claim 6, **characterized in that** the oil is used in an amount of 0.2 g to 8 g per litre of crosslinked functionalized polystyrene polymer beads.

10. Process according to Claim 4, **characterized in that** the crosslinked functionalized polystyrene polymer beads are additionally treated in aqueous suspension with introduction of air, nitrogen or other gases.

11. Use of the mixtures of substances according to Claim 1 for filling cartridges and filters.

12. Cartridges comprising a mixture of substances according to Claim 1.

13. Use of mixtures of substances of organopolysiloxane polyethers and crosslinked polystyrene polymer beads functionalized to form anion exchangers
- for removing anions from aqueous or organic solutions or their vapours,
- for removing anions from condensates,
- for removing colour particles from aqueous or organic solutions,
- for decolorizing and desalting glucose solutions, wheys, dilute gelatin broths, fruit juices, fruit musts or sugars, preferably mono- or disaccharides, in particular fructose solutions, cane sugar, beet sugar solution, for example in the sugar industry, dairies, starch industry and in the pharmaceutical industry,
- for removing organic components from aqueous solutions, for example humic acids from surface water,
- for purifying and treating waters in the chemical industry and electronics industry, in particular for producing ultrapure water,
- in combination with gel-type and/or macroporous cation exchangers for demineralizing aqueous solutions and/or condensates, in particular in the sugar industry.

14. Use of mixtures of substances of organopolysiloxane polyether with crosslinked polystyrene polymer beads functionalized to form cation exchangers
- for removing cations, colour particles or organic components from aqueous or organic solutions and condensates, for example process condensates or turbine condensates,
- for softening, in neutral exchange, aqueous or organic solutions and condensates, for example process condensates or turbine condensates,
- for purifying and treating waters in the chemical industry, the electronics industry and power stations,
- for demineralizing aqueous solutions and/or condensates, **characterized in that** these are used in combination with gel-type and/or macroporous anion exchangers,
- for decolorizing and desalting wheys, dilute gelatin broths, fruit juices, fruit musts and aqueous solutions of sugars,
- for drinking water treatment or for producing ultrapure water (necessary in microchip production for the computer industry), for the chromatographic separation of glucose and fructose, and as catalysts for various chemical reactions (for example in the production of bisphenol A from phenol and acetone).

## Revendications

1. Mélanges de substances à base d'organopolysiloxane-polyéthers, **caractérisés en ce qu'**on utilise, comme autre substance ou composant, un polymère obtenu à partir d'une suspension aqueuse, de préférence un polymère en perles de polystyrène, réticulé, fonctionnalisé.

2. Utilisation des mélanges de substances selon la revendication 1 comme échangeur d'ions à écoulement libre ou comme adsorbant à écoulement libre, de préférence comme échangeur d'ions à écoulement libre, monodispersé ou hétérodispersé.

3. Mélanges de substances selon la revendication 1, **caractérisés en ce qu'**ils contiennent, outre un organopolysiloxane-polyéther, des polymères en perles de polystyrène, réticulés, fonctionnalisés en échangeurs de cations et/ou des polymères en perles de polystyrène, réticulés, fonctionnalisés en échangeurs d'anions.

4. Procédé pour la préparation d'échangeurs d'ions à écoulement libre, **caractérisé en ce qu'**on mélange un organopolysiloxane-polyéther et un polymère en perles de polystyrène, réticulé, fonctionnalisé.

5. Mélanges de substances selon la revendication 1, **caractérisés en ce que** l'organopolysiloxane-polyéther présente une masse molaire de 200 à 20 000.

6. Procédé selon la revendication 4, **caractérisé en ce qu'**on utilise une combinaison d'organopolysiloxane-polyéther et d'huile.

7. Procédé selon la revendication 4, **caractérisé en ce que** l'organopolysiloxane-polyéther est utilisé en une quantité de 0,4 g à 15 g par litre de polymère en perles de polystyrène, réticulé, fonctionnalisé.

8. Procédé selon la revendication 4, **caractérisé en ce que** l'organopolysiloxane-polyéther est utilisé à raison de 0,5 gramme à 20 grammes par litre de solution aqueuse.

9. Procédé selon la revendication 6, **caractérisé en ce que** l'huile est utilisée en une quantité de 0,2 g à 8 g par litre de polymère en perles de polystyrène, réticulé, fonctionnalisé.

10. Procédé selon la revendication 4, **caractérisé en ce que** le traitement des polymères en perles de polystyrène, réticulés, fonctionnalisés, en suspension aqueuse a en outre lieu avec introduction d'air, d'azote ou d'autres gaz.

11. Utilisation des mélanges de substances selon la revendication 1 pour le remplissage de cartouches et de filtres.

12. Cartouches contenant un mélange de substances selon la revendication 1.

13. Utilisation de mélanges de substances d'organopolysiloxane-polyéthers et de polymères en perles de polystyrène, réticulés, fonctionnalisés en échangeurs d'anions
- pour l'élimination d'anions de solutions aqueuses ou organiques ou de leurs vapeurs
- pour l'élimination d'anions de produits de condensation,
- pour l'élimination de particules colorées de solutions aqueuses ou organiques,
- pour la décoloration et le dessalage de solutions de glucose, de lactosérums, de bouillies diluées de gélatine, de jus de fruits, de moûts de fruits ou de sucres, de préférence de monosaccharides ou de disaccharides, en particulier de solutions de fructose, de sucre de canne, de solution de sucre de betterave, par exemple dans l'industrie sucrière, les laiteries, l'industrie de l'amidon et pharmaceutique,
- pour l'élimination de composants organiques de solutions aqueuses, par exemple d'acides humiques d'eaux de surface,
- pour l'épuration et le traitement d'eaux dans l'industrie chimique et électronique, en particulier pour la production d'eau déminéralisée,
- en combinaison avec des échangeurs de cations sous forme de gel et/ou macroporeux pour la déminéralisation de solutions aqueuses et/ou de produits de condensation, en particulier dans l'industrie sucrière.

14. Utilisation de mélanges de substances d'organopolysiloxane-polyéthers avec des polymères en perles de polystyrène, réticulés, fonctionnalisés en échangeurs de cations
- pour l'élimination de cations, de particules colorées ou de composants organiques de solutions aqueuses ou organiques et de produits de condensation, tels que des produits de condensation de procédés ou de turbines,
- pour l'adoucissement dans l'échange neutre de solutions aqueuses ou organiques et de produits de condensation, tels que des produits de condensation de procédés ou de turbines,
- pour l'épuration et le traitement d'eaux dans l'industrie chimique, électronique et de centrales électriques,
- pour la déminéralisation de solutions aqueuses et/ou de produits de condensation, **caractérisée en ce qu'**on les utilise en combinaison avec des échangeurs d'anions sous forme de gel et/ou macroporeux,
- pour la décoloration et le dessalage de lactosérums, de bouillies diluées de gélatine, de jus de fruits, de moûts de fruits et de solutions aqueuses de sucres,
- pour le traitement de l'eau potable ou pour la production d'eau déminéralisée (nécessaire lors de la fabrication de puces pour l'industrie informatique), pour la séparation chromatographique de glucose et de fructose et comme catalyseurs pour différentes réactions chimiques (comme par exemple lors de la production de bisphénol A à partir de phénol et d'acétone).
